(19) **Europäisches Patentamt / European Patent Office / Office européen des brevets**

(11) **EP 4 249 990 A1**

(12) # EUROPEAN PATENT APPLICATION
published in accordance with Art. 153(4) EPC

(43) Date of publication:
**27.09.2023 Bulletin 2023/39**

(21) Application number: **21894397.5**

(22) Date of filing: **18.10.2021**

(51) International Patent Classification (IPC):
***G02B 27/02*** (2006.01)   ***H04N 5/64*** (2006.01)

(52) Cooperative Patent Classification (CPC):
**G02B 27/02; H04N 5/64**

(86) International application number:
**PCT/JP2021/038374**

(87) International publication number:
**WO 2022/107523 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2020 JP 2020192414**

(71) Applicant: **Sony Semiconductor Solutions Corporation**
**Atsugi-shi, Kanagawa 243-0014 (JP)**

(72) Inventor: **IKUTA, Hiroshi**
**Atsugi-shi, Kanagawa 243-0014 (JP)**

(74) Representative: **D Young & Co LLP**
**120 Holborn**
**London EC1N 2DY (GB)**

(54) **VIDEO DISPLAY DEVICE, VIDEO DISPLAY SYSTEM, AND VIDEO DISPLAY METHOD**

(57)    There are provided an image display device, an image display system, and an image display method that automatically adjust image light according to a pupil distance of a user.

The present technology provides an image display device including a plurality of mirrors that reflects image light emitted from at least one light source and projects the image light on an eye of a user and/or an optical element, a mirror angle adjustment unit that adjusts an angle of each of the plurality of mirrors on the basis of a position of the eye or the optical element, and an intermirror distance adjustment unit that adjusts a distance between the plurality of mirrors on the basis of the angle.

*FIG. 1*

EP 4 249 990 A1

**Description**

TECHNICAL FIELD

The present technology relates to an image display device, an image display system, and an image display method.

BACKGROUND ART

Conventionally, a head mounted display (HMD) or the like has been used to implement virtual reality (VR), augmented reality (AR), mixed reality (MR), substitutional reality (SR), and the like.
For example, Patent Document 1 or the like discloses a technique related to a retinal projection HMD in which an image forming device and an eyepiece are separated, and the image forming device projects image light on a pupil of a user via the eyepiece.

CITATION LIST

PATENT DOCUMENT

Patent Document 1: Japanese Patent Application Laid-Open No. 2019-113794

SUMMARY OF THE INVENTION

PROBLEMS TO BE SOLVED BY THE INVENTION

In the retinal projection HMD, in order to project the image light on the pupil of the user, the pupil distance, which is the distance between the center of the right pupil of the user and the center of the left pupil, needs to be adjusted for each user. Specifically, for example, a set value of the retinal projection HMD is adjusted for each user by using the pupil distance of the user measured by the measurement device. Accordingly, a time for measuring the pupil distance and a time for adjusting the set value are required, and there is a problem that the replaced user cannot immediately observe the image.
Accordingly, a main object of the present technology is to provide an image display device, an image display system, and an image display method that automatically adjust image light according to the pupil distance of a user.

SOLUTIONS TO PROBLEMS

The present technology provides an image display device including a plurality of mirrors that reflects image light emitted from at least one light source and projects the image light on an eye of a user and/or an optical element, a mirror angle adjustment unit that adjusts an angle of each of the plurality of mirrors on the basis of a position of the eye or the optical element, and an intermirror distance adjustment unit that adjusts a distance between the plurality of mirrors on the basis of the angle.
The optical element may concentrate and project the image light on the pupil of the user.
The image display device may further include a position information acquisition unit that acquires information regarding a position of the eye or the optical element.
The position information acquisition unit may acquire the information regarding the position on the basis of a captured image including the eye or the optical element.
The mirror angle adjustment unit may adjust the angle in a direction in which a difference between a position of the eye or the optical element before a movement and a position after the movement is reduced.
The plurality of mirrors may include a right mirror corresponding to a right eye of a user and a left mirror corresponding to a left eye of the user, and when the angle of the right mirror is $\theta mr$ and the angle of the left mirror is $\theta ml$, the intermirror distance adjustment unit may adjust the distance in such a manner that a value obtained by calculating $2 \times \theta mr + 2 \times \theta ml$ is a value between a stored maximum set value and a stored minimum set value.
When an angle formed by the image light projected on the right eye of the user and the image light projected on the left eye of the user is $\theta p$, the maximum set value may be a value with which $\theta p$ is maximized, and the minimum set value may be a value with which $\theta p$ is minimized.
The image light may be coherent light.
The image light may be laser light.
Furthermore, the present technology provides an image display system including a plurality of mirrors that reflects image light emitted from at least one light source and projects the image light on an eye of a user and/or an optical element, a mirror angle adjustment unit that adjusts an angle of each of the plurality of mirrors on the basis of a position of the eye or the optical element, and an intermirror distance adjustment unit that adjusts a distance between the plurality of mirrors on the basis of the angle.

Furthermore, the present technology provides an image display method including, by a plurality of mirrors, reflecting image light emitted from at least one light source and projecting the image light on an eye of a user and/or an optical element, adjusting an angle of each of the plurality of mirrors on the basis of a position of the eye or the optical element, and adjusting a distance between the plurality of mirrors on the basis of the angle.

BRIEF DESCRIPTION OF DRAWINGS

Fig. 1 is a conceptual diagram of an image display device 10 according to one embodiment of the present technology.
Fig. 2 is a schematic plan view illustrating a configuration of the image display device 10 according to one embodiment of the present technology.
Fig. 3 is a flowchart illustrating an example of a procedure of a control unit 14 according to one embodiment of the present technology.
Fig. 4 is a flowchart illustrating an example of a procedure of the control unit 14 according to one embodiment of the present technology.
Fig. 5 is a schematic plan view illustrating a configuration of the image display device 10 according to one embodiment of the present technology.
Fig. 6 is a block diagram illustrating a configuration of an image display system 1000 according to one embodiment of the present technology.
Fig. 7 is a block diagram illustrating a hardware configuration of the control unit 14 according to one embodiment of the present technology.
Fig. 8 is a flowchart illustrating an example of a procedure of an image display method according to one embodiment of the present technology.

MODE FOR CARRYING OUT THE INVENTION

Hereinafter, preferred embodiments for carrying out the present technology will be described. Note that the embodiments described below are examples of representative embodiments of the present technology, and the scope of the present technology is not interpreted in a narrow sense by them. Furthermore, the present invention can combine any of the following examples and modifications thereof.
In the following description of the embodiment, the configuration may be described using terms with "substantially" such as substantially parallel and substantially orthogonal. For example, "substantially parallel" means not only being completely parallel, but also including a state of being substantially parallel, that is, a state shifted by, for example, about several percent from the completely parallel state. The same applies to other terms with "substantially". Furthermore, each drawing is a schematic view and is not necessarily strictly illustrated.
In the drawings, unless otherwise specified, "upper" means an upper direction or an upper side in the drawings, "lower" means a lower direction or a lower side in the drawings, "left" means a left direction or a left side in the drawings, and "right" means a right direction or a right side in the drawings. Furthermore, in the drawings, the same or equivalent elements or members are designated by the same reference numerals, and duplicate descriptions will be omitted.
The present technology will be described in the following order.

1. First Embodiment of Present Technology (Image Display Device)
2. Second Embodiment of Present Technology (Image Display System)
3. Third Embodiment of Present Technology (Image Display Method)
4. Examples of Present Technology

[1. First Embodiment of Present Technology (Image Display Device)]

[(1) Outline of Present Embodiment]

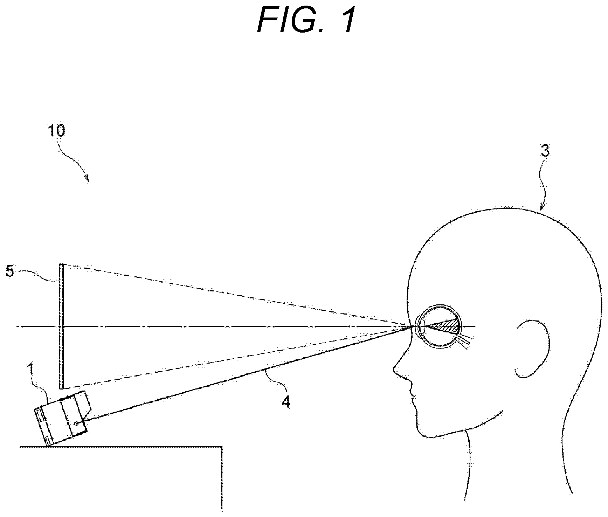

An image display device 10 according to one embodiment of the present technology will be described with reference to Fig. 1. Fig. 1 is a conceptual diagram of the image display device 10 according to one embodiment of the present technology. As illustrated in Fig. 1, the image display device 10 according to the present embodiment includes an image projection unit 1 and an eyepiece optical unit 2.

The eyepiece optical unit 2 can be mounted on the head of a user 3. An embodiment of the eyepiece optical unit 2 may be, for example, glasses, goggles, a helmet, or the like. An optical element 21 included in the eyepiece optical unit 2 is separated from the image projection unit 1 and is disposed in front of an eye of the user 3.

The image projection unit 1 projects image light 4 toward the head of the user 3. The image light projected from the image projection unit 1 reaches the eye of the user 3 through the optical element 21 disposed on the optical axis of the image light. The optical element 21 concentrates and projects the image light on the pupil of the user 3. The image light passes through the pupil of the user 3 and forms an image on the retina. Thus, the user 3 sees a virtual image 5 floating in the space. Since the image light forms the image on the retina, even in a case where the pupil or the optical element 21 is displaced, the field of view is easily secured, and the image hardly disappears.

The optical element 21 may be, for example, a hologram lens or the like. The optical element 21 may have a diffraction grating that diffracts the image light projected from the image projection unit 1. The diffraction grating is used to diffract the image light projected from the image projection unit 1 to reach the eye of the user 3.

More specifically, the traveling direction of the image light projected from the image projection unit 1 is changed by the optical element 21 and guided to the eye of the user 3. Thus, the user can visually recognize the image by the image light from the image projection unit 1 without the presence of the image projection unit 1 in the line-of-sight direction of the user 3.

The image projection unit 1 can be positioned below the line-of-sight direction of the user. Note that the image projection unit 1 may be positioned above the line-of-sight direction of the user.

Note that, according to another embodiment of the present technology, the image projection unit 1 may be positioned near the same height as the line-of-sight direction of the user 3. In this case, for example, by limiting the position or the like where the image is displayed to a part (for example, an upper half, a lower half, a left half, a right half, or the like) in the field of view of the user 3, or the like, the user can be prevented from being bothered by the overlap between the image projection unit 1 and the outside scene.

Preferably, the optical element 21 can have an optical characteristic of functioning as a lens for light in a wavelength range of image light and transmitting light having a wavelength outside the wavelength range. Due to the optical characteristic, the user 3 can visually recognize, for example, a scene ahead in the line-of-sight direction through the optical element 21, and can visually recognize an image by the image light. Furthermore, since the optical element 21 has the optical characteristic, in a case where image projection is not performed, the eyepiece optical unit 2 can be used for application of the eyepiece optical unit 2 itself such as application as glasses, for example.

Examples of the optical element 21 having the optical characteristic may include a hologram lens, preferably a film-shaped hologram lens, and more preferably a transparent film-shaped hologram lens. The desired optical characteristic can be imparted to the hologram lens by techniques known in the art. As the hologram lens, a commercially available hologram lens may be used, or the hologram lens may be manufactured by a technique known in the art.

For example, the hologram lens can be stacked as the optical element 21 on one surface of the lens included in the eyepiece optical unit 2. The surface may be a surface on the outside scene side or a surface on the eyeball side. The image display device 10 according to the present technology can be used by attaching the optical element 21 to the eyepiece optical unit 2 appropriately selected by the user or a person skilled in the art. Therefore, the range of selection of the eyepiece optical unit 2 that can be employed in the present technology is very wide.

Note that, since the optical element 21 only needs to bend image light, for example, a generally used convex lens or the like may be used for the optical element 21. However, the convex lens makes it difficult for the user 3 to visually recognize a scene ahead in the line-of-sight direction, and thus it is more preferred to use the hologram lens.

Note that although the optical element 21 bends the image light in Fig. 1, the image light may directly reach the eye of the user 3 without passing through the optical element 21 in the present technology.

As a technology for forming an image on the retina, for example, a Maxwell optical system, a laser scanning optical system, or the like can be used. The Maxwell optical system is a system that passes image light through the center of the pupil to form an image on the retina. The laser scanning optical system is a method of scanning red, green, and blue light at high speed to write an image on the retina. The laser scanning optical system is not affected by the resolution of the image, and can bring the image as close as possible to the human field of view.

When the focus adjustment function of the crystalline lens serving as a lens is deteriorated, there is a problem that myopia, hyperopia, or the like occurs. However, in the present technology, since the image is directly projected on the retina, the user 3 can visually recognize a clear image. The image visually recognized by the user 3 is displayed as the virtual image 5. The user 3 can visually recognize both the virtual image 5 and its background in focus at the same time.

Furthermore, since only the user 3 can visually recognize the image by the image light, the image display device 10 can prevent this image from being glanced furtively by others who are not the user 3. Thus, in a case where the image includes personal information or confidential information related to the user 3, the image display device 10 can prevent the personal information or the confidential information from leaking.

The image light projected by the image projection unit 1 may be coherent light. The coherent light has a characteristic that light beams are parallel and difficult to spread. Thus, an effect that the virtual image 5 is easily focused at any distance from eyes of the user 3 is produced.

Note that the image light output from a light source unit may not be ideal coherent light. The image light may be, for example, laser light. Laser light is infinitesimally close to coherent light, and has a characteristic that light beams are parallel and difficult to spread. Thus, an effect that the virtual image 5 is easily focused at any distance from eyes of the user 3 is produced. This can be achieved by using a semiconductor laser (LD: Laser Diode) for the light source unit.

According to a preferred embodiment of the present technology, for example, a light emission diode (LED) or the like may be used for the light source unit.

According to a preferred embodiment of the present technology, a projection optical system 11 may project different image light on each of both eyes of the user 3. For example, the projection optical system 11 can project different image light on each of both eyes on the basis of a parallax between both eyes of the user 3. Thus, for example, the user can recognize the three-dimensional position of the presented image, for example, by binocular vision. For example, a three-dimensional virtual image 5 appears in the outside scene the user is viewing.

The image projection unit 1 is provided as an infrastructure, for example, and can be disposed in a facility or the like. Thus, since the user 3 does not need to carry the image projection unit 1, the burden on the user 3 is reduced. The user 3 is relieved of concern about power consumption of the image projection unit 1.

Furthermore, in a case where the user 3 carries the image projection unit 1, the image projection unit 1 performs information communication using a communication technology such as Wi-Fi or long term evolution (LTE), for example. At this time, there is a possibility that the radio wave becomes unstable and communication cannot be performed. On the other hand, if the image projection unit 1 is disposed as an infrastructure in a facility or the like, a stable information communication network can be constructed. As a consequence, the image projection unit 1 can access image data as a source of the image light 4 at a high speed, and can provide a clear and high-resolution image.

In this manner, the image display device 10 can more safely and easily provide the user with an unprecedented new image experience.

Note that the above-described effects can also be obtained by other embodiments described later. Therefore, in other embodiments, repeated description of the effect is omitted.

[(2) Configuration of Present Embodiment]

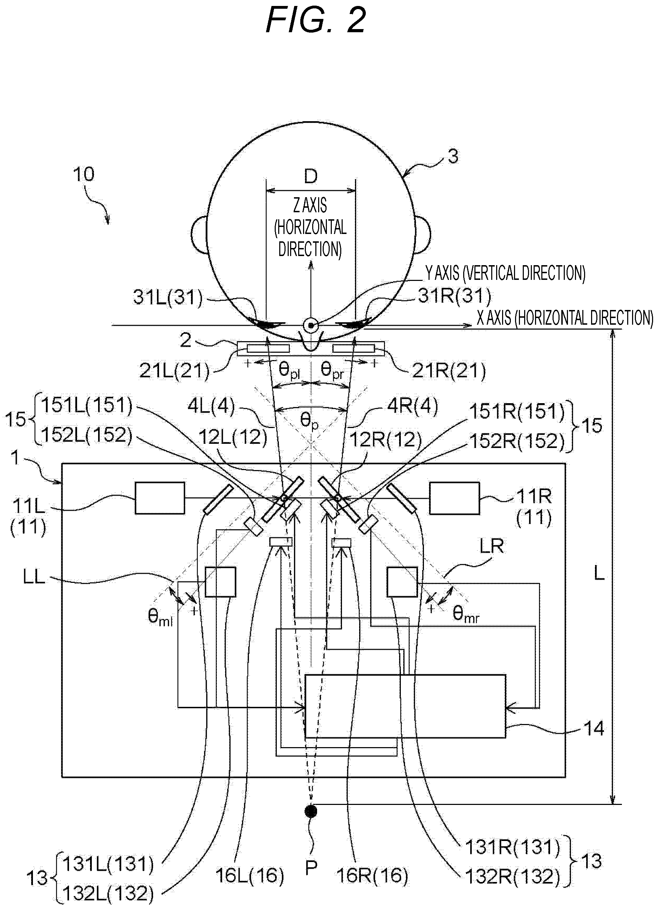

A configuration of the image display device 10 according to one embodiment of the present technology will be described with reference to Fig. 2. Fig. 2 is a schematic plan view illustrating a configuration of the image display device 10 according to one embodiment of the present technology.

As illustrated in Fig. 2, a straight line connecting the pupil of the right eye 31R and the pupil of the left eye 31L of the user 3 in a plan view is defined as an X axis. A perpendicular bisector to a line segment connecting the pupil of the right eye 31R and the pupil of the left eye 31L of the user 3 is defined as a Z axis. An axis orthogonal to the X axis and the Z axis is defined as a Y axis. That is, the plan view is an XZ plan view.

The eyepiece optical unit 2 includes the optical element 21. The optical element 21 may include, for example, a right optical element 21R corresponding to the right eye 31R of the user 3 and a left optical element 21L corresponding to the left eye 31L of the user 3.

The image projection unit 1 according to one embodiment of the present technology can include, for example, a light source 11, a mirror 12, a position information acquisition unit 13, a control unit 14, a mirror angle adjustment unit 15, an intermirror distance adjustment unit 16, and the like.

The light source 11 emits image light. The light source 11 may include, for example, a right light source 11R corresponding to the right eye 31R of the user 3 and a left light source 11L corresponding to the left eye 31L of the user 3. Image light emitted from the right light source 11R is projected on the right eye 31R of the user. Image light emitted from the left light source 11L is projected on the left eye 31L of the user. Note that the image light emitted from one light source may be branched by a filter or the like and projected on each of the right eye 31R and the left eye 31L of the user 3.

The mirror 12 reflects the image light emitted from the light source 11 and projects the image light on the eye 31 of the user 3 and/or the optical element 21. The mirror 12 may include, for example, a right mirror 12R corresponding to the right eye 31R of the user 3 and a left mirror 12L corresponding to the left eye 31L of the user 3. The mirror 12 can be achieved by using, for example, a galvanometer mirror. The galvanometer mirror may include a mirror whose angle in the XZ plane is adjusted and a mirror whose angle in the XY plane is adjusted.

The position information acquisition unit 13 acquires information regarding the position of the eye 31 of the user 3 and/or the optical element 21. Consequently, the image projection unit 1 can cause the direction of the projected image light to follow the movement of the eye 31 and/or the optical element 21.

The position information acquisition unit 13 may include, for example, a half mirror 131 and a position sensor 132.

The half mirror 131 can transmit light emitted from the light source 11 and reflect light from the mirror 12, for example. The half mirror 131 may include, for example, a right half mirror 131R corresponding to the right eye 31R of

5

the user 3 and a left half mirror 131L corresponding to the left eye 31L of the user 3.

The position sensor 132 acquires information regarding the position of the eye 31 of the user 3 and/or the optical element 21 on the basis of the light reflected by the half mirror 131. The position sensor 132 may include, for example, a right position sensor 132R corresponding to the right eye 31R of the user 3 and a left position sensor 132L corresponding to the left eye 31L of the user 3. The right position sensor 132R acquires information regarding the position of the right eye 31R or the right optical element 21R of the user 3. The left position sensor 132L acquires information regarding the position of the left eye 31L or the left optical element 21L of the user 3.

The position sensor 132 may be, for example, an image sensor or the like. As the image sensor, for example, a CMOS or a CCD may be used. A captured image including the eye 31 of the user 3 and/or the optical element 21 is acquired by the image sensor. Thus, the position information acquisition unit 13 can acquire three-dimensional position information of the eye 31 of the user 3 and/or the optical element 21 by processing the captured image. Note that the position information acquisition unit 13 may acquire the three-dimensional position information by a pupil recognition technology. As the pupil recognition technology, a technology known in the art may be used. The position information acquisition unit 13 can be achieved by using, for example, a camera, a photodetector, or the like.

The control unit 14 controls components included in the image display device 10. The control unit 14 can be achieved by using, for example, a microcomputer in which firmware is mounted.

The mirror angle adjustment unit 15 adjusts an angle of the mirror 12. The mirror angle adjustment unit 15 may include, for example, a mirror angle drive unit 151 and a mirror angle sensor 152.

The mirror angle drive unit 151 changes the angle of the mirror 12. The mirror angle drive unit 151 can include, for example, a voice coil motor, a DC motor, a stepping motor, or the like. The mirror angle drive unit 151 may include, for example, a right mirror angle drive unit 151R that changes the angle of the right mirror 12R and a left mirror angle drive unit 151L that changes the angle of the left mirror 12L.

The mirror angle sensor 152 detects the angle of the mirror 12. The mirror angle sensor 152 may include, for example, a right mirror angle sensor 152R that detects the angle of the right mirror 12R and a left mirror angle sensor 152L that detects the angle of the left mirror 12L.

The mirror angle adjustment unit 15 can adjust the inclination of the optical axis of the image light on the basis of the position information obtained by position information acquisition unit 13. Thus, even if the position of the eye 31 of the user 3 and/or the optical element 21 move, the image light can be projected following the position of the eye 31 of the user 3 and/or the optical element 21.

As described above, the image projection unit 1 includes a plurality of mirrors 12 that reflects the image light emitted from at least one light source and projects the image light on the eye 31 of the user 3 and/or the optical element 21, the mirror angle adjustment unit 15 that adjusts the angle of each of the plurality of mirrors 12 on the basis of the position of the eye 31 or the optical element 21, and the intermirror distance adjustment unit 16 that adjusts the distance between the plurality of mirrors 12 on the basis of the angle.

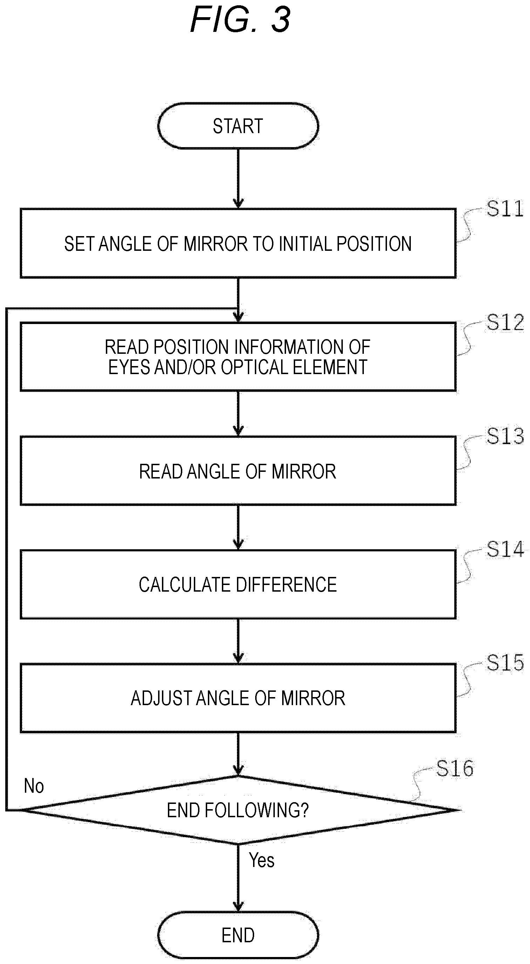

More specifically, the control unit 14 instructs the mirror angle adjustment unit 15 to follow the position of the eye 31 of the user 3 and/or the optical element 21. This point will be described with reference to Fig. 3. Fig. 3 is a flowchart illustrating an example of a procedure of the control unit 14 according to one embodiment of the present technology.

As illustrated in Fig. 3, first, in step S11, the control unit 14 instructs the mirror angle drive unit 151 to set the angle of the mirror 12 to an initial position. In accordance with the instruction, the mirror angle drive unit 151 adjusts the angle of the mirror 12 and moves the mirror to the initial position.

The initial position will be described. In Fig. 2, the initial position of the right mirror 12R may be, for example, a position where the angle formed by a right reference line LR and the Z axis is 45 degrees. The initial position of the left mirror 12L may be, for example, a position where the angle formed by a left reference line LL and the Z axis is 45 degrees. Each of an angle $\theta$mr of the right mirror 12R and an angle $\theta$ml of the left mirror 12L is calculated as a difference from the initial position.

The description returns to Fig. 3. Next, in step S12, the control unit 14 reads information regarding the position of the eye 31 of the user 3 and/or the optical element 21 acquired by the position sensor 132.

Next, in step S13, the control unit 14 reads the angle of the mirror 12 acquired by the mirror angle sensor 152. Specifically, the control unit 14 reads the angle $\theta$mr of the right mirror 12R and the angle $\theta$ml of the left mirror 12L.

When the position of the eye 31 of the user 3 and/or the optical element 21 moves, the image display device 10 follows the movement. For this purpose, in step S14, the control unit 14 calculates a difference between the position before the movement and the position after the movement of the eye 31 of the user 3 and/or the optical element 21. Note that, immediately after the start of following, the position before the movement may be the position read in step S12, and the position before the movement may be the initial position.

Next, in step S15, the control unit 14 instructs the mirror angle drive unit 151 to adjust the angle of the mirror 12 in a direction in which the difference decreases. Thus, the mirror angle adjustment unit 15 adjusts the angle of the mirror 12 in a direction in which the difference between the position before the movement of the eye 31 of the user 3 and/or the optical element 21 and the position after the movement is decreased. Consequently, the inclination of the optical axis of the image light is adjusted so as to follow the movement of the position of the eye 31 of the user 3 and/or the optical element 21.

Finally, in step S16, the control unit 14 determines whether or not to end the following. For example, when the eye 31 of the user 3 and/or the optical element 21 deviate from the angle of view and cannot be recognized, the control unit 14 ends the following (step S16: Yes).

On the other hand, when it is determined that the following is continued (step S16: No), the control unit 14 performs the processing of step S12 and subsequent steps again. At this time, the position read in the first step S12 is a position before the movement of the eye 31 of the user 3 and/or the optical element 21, and the position read in the second step S12 is a position after the movement of the eye 31 of the user 3 and/or the optical element 21.

In this manner, the image display device 10 can follow the movement of the eye 31 of the user 3 and/or the optical element 21.

The intermirror distance adjustment unit 16 adjusts the distance between the plurality of mirrors on the basis of the angle of the mirror 12 read in step S15 illustrated in Fig. 3. Specifically, the intermirror distance adjustment unit 16 adjusts the distance between the right mirror 12R and the left mirror 12L in an X-axis direction. In particular, the intermirror distance adjustment unit 16 adjusts a mirror rotation center distance dm that is a distance between a center of a rotation axis of the right mirror 12R and a center of a rotation axis of the left mirror 12L in the X-axis direction.

The intermirror distance adjustment unit 16 may include, for example, a right intermirror distance adjustment unit 16R that moves the right mirror 12R in the X-axis direction and a left intermirror distance adjustment unit 16L that moves the left mirror 12L in the X-axis direction. The intermirror distance adjustment unit 16 can be achieved by using, for example, a stepping motor or a direct-current (DC) motor and by configuring a lead screw feed mechanism.

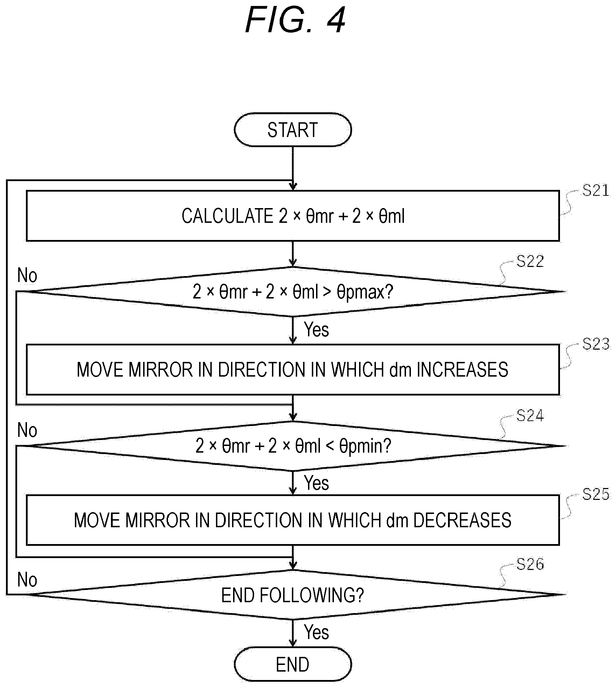

The control unit 14 instructs the intermirror distance adjustment unit 16 to adjust the distance between the plurality of mirrors. This point will be described with reference to Fig. 4. Fig. 4 is a flowchart illustrating an example of a procedure of the control unit 14 according to one embodiment of the present technology.

As illustrated in Fig. 4, first, in step S21, the control unit 14 calculates $2 \times \theta mr + 2 \times \theta ml$ using the angle $\theta mr$ of the right mirror 12R and the angle $\theta ml$ of the left mirror 12L.

The calculation will be described again with reference to Fig. 2. It is assumed that an angle formed by right image light 4R projected on the right eye 31R of the user 3 and the Z axis is $\theta pr$. It is assumed that an angle formed by left image light 4L projected on the left eye 31L of the user 3 and the Z axis is $\theta pl$. At this time, $\theta pr$ is calculated by calculation of $2 \times \theta mr$. $\theta pl$ is calculated by calculation of $2 \times \theta ml$.

That is, an angle $\theta p$ formed by the right image light 4R and the left image light 4L is derived by calculating $\theta pr + \theta pl$. Moreover, the angle $\theta p$ is derived by calculation of $2 \times \theta mr + 2 \times \theta ml$. According to the present technology, the angle $\theta p$ including the right image light 4R and the left image light 4L can be derived with a small number of sensors. By having a small number of sensors, the present technology can contribute to, for example, downsizing and/or weight reduction of the image projection unit 1.

The control unit 14 derives the angle $\theta p$ formed by the right image light 4R and the left image light 4L by calculation of $2 \times \theta mr + 2 \times \theta ml$. The angle $\theta p$ can be changed depending on, for example, the pupil distance of the user 3 and the distance between the user 3 and the image projection unit 1. Thus, the maximum value and the minimum value of $\theta p$ can be stored. A maximum set value $\theta pmax$ that is a value with which $\theta p$ is maximized, and a minimum set value $\theta pmin$ that is a value with which $\theta p$ is minimized, can be stored in, for example, a memory (not illustrated) included in the image projection unit 1.

The maximum set value $\theta pmax$ and the minimum set value $\theta pmin$ may be any values desired by the user. Here, an example of defining the maximum set value $\theta pmax$ and the minimum set value $\theta pmin$ will be described.

A description will be given of a case where an image that is a source of the image light 4 projected on the eye 31 of the user 3 and/or the optical element 21 is captured. A right camera and a left camera are disposed such that a distance between the right camera that captures an image that is a source of the right image light 4R and the left camera that captures an image that is a source of the left image light 4L is substantially the same as the pupil distance. Each of the right camera and the left camera preferably captures an image of the object P with a lens having a focal length of 50 mm (in terms of 35 mm film) close to an image observed with human eyes. Note that a distance from each of the right camera and the left camera to the object P is L.

When the image light 4 based on the image captured in this manner is projected, the angle $\theta p$ formed by the right image light 4R and the left image light 4L is adjusted so as to satisfy the following Expression (1), whereby the object P is expressed in a natural stereoscopic view.

$$\theta p = \arctan(0.5 \times D/L) \times 2 \quad ...(1)$$

Note that the image or the like captured by a telephoto lens can be naturally observed even if there is no left-right parallax. Accordingly, when the image light 4 based on this image is projected, the angle θp formed by the right image light 4R and the left image light 4L may be substantially the same as zero.

Since there is a difference between the distance between the right camera and the left camera when the image is captured and the pupil distance of the user 3 when the image is observed, the maximum set value θpmax and the minimum set value θpmin can be set. When there is θp between the maximum set value θpmax and the minimum set value θpmin, the user 3 can observe the object P included in the image light 4 in a natural stereoscopic view.

The control unit 14 instructs the intermirror distance adjustment unit 16 to adjust the mirror rotation center distance dm in such a manner that a value obtained by calculating $2 \times \theta mr + 2 \times \theta ml$ is a value between the stored maximum set value θpmax and minimum set value θpmin. In accordance with the instruction, the intermirror distance adjustment unit 16 adjusts the mirror rotation center distance dm.

Returning to the description of Fig. 4, a specific description will be given below. In step S22, the control unit 14 compares the value obtained by calculating $2 \times \theta mr + 2 \times \theta ml$ with the maximum set value θpmax.

When the value obtained by calculating $2 \times \theta mr + 2 \times \theta ml$ is larger than the maximum set value θpmax (step S22: Yes), in step S23, the control unit 14 instructs the intermirror distance adjustment unit 16 to move the right mirror 12R and/or the left mirror 12L in a direction in which the mirror rotation center distance dm increases. In accordance with the instruction, the intermirror distance adjustment unit 16 moves the right mirror 12R and the left mirror 12L in a direction in which the center of the rotation axis of the right mirror 12R and the center of the rotation axis of the left mirror 12L are separated from each other. At this time, a perpendicular bisector to a line segment connecting the center of the rotation axis of the right mirror 12R and the center of the rotation axis of the left mirror 12L is preferably the Z axis.

Next, in step S24, the control unit 14 compares the value obtained by calculating $2 \times \theta mr + 2 \times \theta ml$ with the minimum set value θpmin.

When the value obtained by calculating $2 \times \theta mr + 2 \times \theta ml$ is smaller than the minimum set value θpmin (step S24: Yes), in step S25, the control unit 14 instructs the intermirror distance adjustment unit 16 to move the right mirror 12R and the left mirror 12L in a direction in which the mirror rotation center distance dm decreases. In accordance with the instruction, the intermirror distance adjustment unit 16 moves the right mirror 12R and the left mirror 12L in a direction in which the center of the rotation axis of the right mirror 12R and the center of the rotation axis of the left mirror 12L approach each other. At this time, the perpendicular bisector to the line segment connecting the center of the rotation axis of the right mirror 12R and the center of the rotation axis of the left mirror 12L is preferably the Z axis.

When the condition in step S22 and the condition in step S24 are satisfied, that is, when the value obtained by calculating $2 \times \theta mr + 2 \times \theta ml$ is equal to or less than the maximum set value θpmax and is equal to or more than the minimum set value θpmin, the control unit 14 ends the instruction to the intermirror distance adjustment unit 16.

Finally, in step S26, the control unit 14 determines whether or not to end the following. For example, when the eye 31 of the user 3 and/or the optical element 21 deviate from the angle of view and cannot be recognized, the control unit 14 ends the following (step S26: Yes).

On the other hand, when it is determined that the following is continued (step S26: No), the control unit 14 performs the processing of step S21 and subsequent steps again.

In this manner, the intermirror distance adjustment unit 16 can automatically adjust the mirror rotation center distance dm according to the pupil distance of the user 3.

The following process illustrated in Fig. 3 and the intermirror distance adjustment process illustrated in Fig. 4 can be performed in parallel. That is, the image projection unit 1 can adjust the mirror rotation center distance dm according to the pupil distance of the user 3 while following the movement of the user 3.

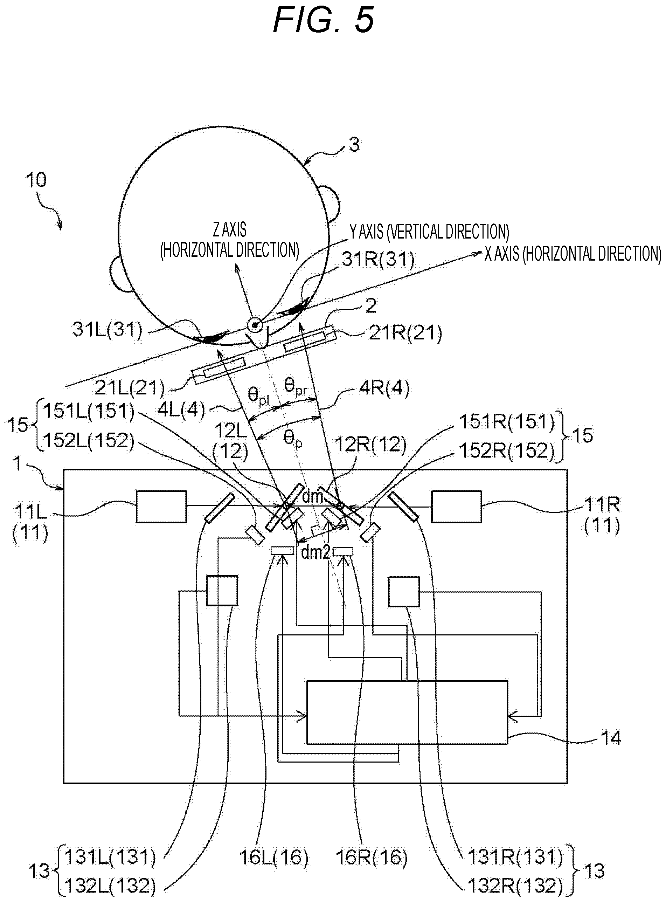

Meanwhile, the user 3 is not always located in front of the image projection unit 1. This point will be described with reference to Fig. 5. Fig. 5 is a schematic plan view illustrating a configuration of the image display device 10 according to one embodiment of the present technology.

As illustrated in Fig. 5, the mirror rotation center distance dm when viewed from the user 3 is dm2 smaller than the actual dm. Accordingly, there has conventionally been a problem that the angle θp formed by the right image light 4R and the left image light 4L changes in a direction in which the angle θp becomes larger than the actual angle.

However, according to the present technology, the mirror rotation center distance dm is adjusted in such a manner that a value obtained by calculating $2 \times \theta mr + 2 \times \theta ml$ is a value between the stored maximum set value θpmax and minimum set value θpmin. Consequently, even when the user 3 is not positioned in front of the image projection unit 1, the image projection unit 1 can maintain the predetermined θp.

[2. Second Embodiment of Present Technology (Image Display System)]

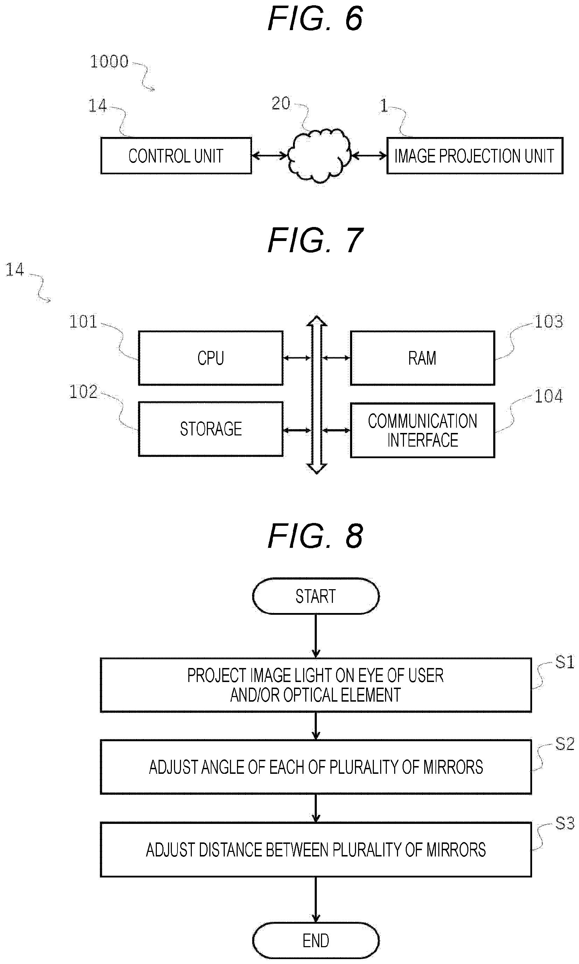

The control unit 14 may be configured separately from the image projection unit 1. This point will be described with reference to Fig. 6. Fig. 6 is a block diagram illustrating a configuration of an image display system 1000 according to one embodiment of the present technology.

As illustrated in Fig. 6, the image display system 1000 according to one embodiment of the present technology can include the control unit 14 and the image projection unit 1.

The image display system 1000 according to the present embodiment may use a technology according to another embodiment. Therefore, detailed description of components using the technology according to another embodiment will be omitted.

The control unit 14 and the image projection unit 1 may be connected via an information communication network 20. The information communication network 20 can be achieved by, for example, a wired network such as a local area network (LAN) or a wide area network (WAN), a wireless network such as a wireless local area network (WLAN) or a wireless wide area network (WWAN) via a base station, the Internet using a communication protocol such as Transmission Control Protocol/Internet Protocol (TCP/IP), or the like.

The image projection unit 1 includes a plurality of mirrors 12 that reflects image light emitted from at least one light source and projects the image light on an eye of a user and/or an optical element, a mirror angle adjustment unit 15 that adjusts an angle of each of the plurality of mirrors on the basis of a position of the eye or the optical element, and an intermirror distance adjustment unit 16 that adjusts a distance between the plurality of mirrors on the basis of the angle.

The control unit 14 may be, for example, a computer device such as a smartphone terminal, a tablet terminal, a mobile phone terminal, a personal digital assistant (PDA), a personal computer (PC), or a server.

A hardware configuration of the control unit 14 will be described with reference to Fig. 7. Fig. 7 is a block diagram illustrating a hardware configuration of the control unit 14 according to one embodiment of the present technology.

The control unit 14 can include, for example, a CPU 101, a storage 102, a random access memory (RAM) 103, a communication interface 104, and the like as components. The respective components are connected by, for example, a bus as a data transmission path.

The CPU 101 is achieved by, for example, a microcomputer, and controls each component of the control unit 14. Alternatively, the CPU 101 has, for example, a function of instructing the image projection unit 1 to perform an operation. This function can be achieved by, for example, a program. The program can function by being read by the CPU 101.

The storage 102 stores control data such as programs and operation parameters, and the like used by the CPU 101. The storage 102 can be achieved by using, for example, a hard disk drive (HDD) or a solid state drive (SSD), or the like.

The RAM 103 temporarily stores, for example, a program and the like executed by the CPU 101.

The communication interface 104 has a function of communicating via an information communication network using a communication technology such as Wi-Fi, Bluetooth (registered trademark), or long term evolution (LTE), for example.

The control unit 14 can be achieved by using programmed software, hardware, and the like. The program may be stored in a computer device or a computer system other than the image display system 1000. In this case, the image display system 1000 can use a cloud service that provides the function of this program. Examples of the cloud service include software as a service (SaaS), infrastructure as a service (IaaS), and platform as a service (PaaS), and the like.

Furthermore, the program can be stored using various types of non-transitory computer readable media and supplied to the computer. The non-transitory computer readable media include various types of tangible storage media. Examples of the non-transitory computer readable medium include a magnetic recording medium (for example, a flexible disk, a magnetic tape, or a hard disk drive), a magneto-optical recording medium (for example, a magneto-optical disk), a compact disc read only memory (CD-ROM), a CD-R, a CD-R/W, and a semiconductor memory (for example, a mask ROM, a programmable ROM (PROM), an erasable PROM (EPROM), a flash ROM, or a random access memory (RAM)). Furthermore, the above-described program may be supplied to the computer by various types of transitory computer readable media. Examples of transitory computer-readable media include electrical signals, optical signals, and electromagnetic waves. The transitory computer-readable medium can supply the above-described program to the computer via a wired communication path such as an electric wire and an optical fiber, or a wireless communication path.

Note that the technology used in the present embodiment can also be used in other embodiments described later.

[3. Third Embodiment of Present Technology (Image Display Method)]

An image display method according to one embodiment of the present technology is implemented by using a computer device. An image display method according to one embodiment of the present technology will be described with reference to Fig. 8. Fig. 8 is a flowchart illustrating an example of a procedure of an image display method according to one embodiment of the present technology.

As illustrated in Fig. 8, first, in step S1, a plurality of mirrors reflects image light emitted from at least one light source and projects the image light on the eye of the user and/or the optical element.

Next, in step S2, the computer device adjusts an angle of each of the plurality of mirrors on the basis of a position of the eye or the optical element.

Finally, in step S3, the computer device adjusts a distance between the plurality of mirrors on the basis of the angle.

The image display method according to the present embodiment may use the technology according to other embodiments described above. Accordingly, the technique described in the above-described embodiment will not be described again.

[4. Examples of Present Technology]

Examples of the present technology will be described. Note that the content described below is an example, and there may be other examples.

[(1) Digital Signage]

The image display device 10 (including the image display system 1000, and the same applies hereinafter) according to one embodiment of the present technology can be used as, for example, a digital signage.

For example, at a station or the like, the image display device 10 can provide an image including operation information to the user. The image display device 10 can provide the user with an image including operation information regarding a specific route, for example. The image may be superimposed and displayed on a route map.

For example, in an outdoor festival or the like, the image display device 10 can provide the user with an image including information regarding an artist. The image display device 10 can provide the user with an image including schedule information of performance of a specific artist, for example. The image may be superimposed and displayed on a map of a place where the outdoor festival is held.

For example, in a store or the like, the image display device 10 can provide an image including the product information to the user. The image display device 10 can provide the user with an image including, for example, information regarding an arrangement place of a specific product. The image may be superimposed and displayed on the floor map of the store.

For example, in a restaurant or the like, the image display device 10 can provide an image including food information to the user. The image may be superimposed and displayed on a menu.

[(2) Agent]

The image display device 10 according to one embodiment of the present technology can be used as, for example, an agent.

For example, the image display device 10 provided in a robot or the like can provide an image to the user. The image display device 10 can prevent the image from being glanced furtively by another person.

For example, in a cafe or the like, the image display device 10 can provide the user with an image including a chat screen, a mail screen, and the like.

For example, in a reception space of a company or the like, the image display device 10 can provide a user with an image including information regarding a visit partner of the user.

For example, while driving a bicycle or at a workout gym, the image display device 10 can provide an image to the user without obstructing the view of the user.

For example, during use of a smartphone terminal, a PC, or the like, the image display device 10 can provide an image to the user as a subscreen.

In addition, the image display device 10 can be used for, for example, an intelligent speaker.

[(3) Security]

The image display device 10 according to one embodiment of the present technology can be used for, for example, a system in which an advanced security requirement is required.

The image display device 10 can be used, for example, to prompt the user to input personal information. The image display device 10 can provide the user with an image including information necessary for inputting the personal information. As a specific example, the image display device 10 can be used for filling in a document at a city hall, filling in an interview sheet at a hospital, a signature certifying receipt of a home delivery article, a signature of a credit card at a cash register of a store, a business negotiation at a cafe, a business record of a sales representative, and the like.

The image display device 10 can be used, for example, to prompt the user to input a personal identification number. The image display device 10 can provide the user with an image in which numbers necessary for inputting a personal identification number are randomly disposed, for example. As a specific example, the image display device 10 can be used for automated teller machine (ATM) at a bank, credit card payment at a store register, coin locker at a station or the like, unlocking of a smartphone terminal or the like, and the like.

The image display device 10 can be used, for example, to prompt the user to input information necessary for paying a usage fee. The image display device 10 can provide the image to the user so that an image including personal information related to the user and an image in which numbers necessary for inputting a personal identification number are randomly arranged are superimposed and displayed. As a specific example, the image display device 10 can be used for a reception machine or a checkout device in a medical institution, an information terminal or a checkout device in a store, a checkout device in a leisure facility, or the like.

In addition to this, the configurations described in the above-described embodiments can be selected or changed as appropriate to other configurations without departing from the gist of the present technology.

Note that effects described in the present description are merely examples and are not limited, and other effects may be provided.

Note that the present technology can also employ the following configurations.

[1] An image display device, including:

a plurality of mirrors that reflects image light emitted from at least one light source and projects the image light on an eye of a user and/or an optical element;
a mirror angle adjustment unit that adjusts an angle of each of the plurality of mirrors on the basis of a position of the eye or the optical element; and
an intermirror distance adjustment unit that adjusts a distance between the plurality of mirrors on the basis of the angle.

[2] The image display device according to [1], in which
the optical element concentrates and projects the image light on the pupil of the user.
[3] The image display device according to [1] or [2], further including
a position information acquisition unit that acquires information regarding a position of the eye or the optical element.
[4] The image display device according to [3], in which
the position information acquisition unit acquires the information regarding the position on the basis of a captured image including the eye or the optical element.
[5] The image display device according to any one of [1] to [4], in which
the mirror angle adjustment unit adjusts the angle in a direction in which a difference between a position of the eye or the optical element before a movement and a position after the movement is reduced.
[6] The image display device according to any one of [1] to [5], in which

the plurality of mirrors includes a right mirror corresponding to a right eye of a user and a left mirror corresponding to a left eye of the user, and
when the angle of the right mirror is $\theta$mr and the angle of the left mirror is $\theta$ml, the intermirror distance adjustment unit adjusts the distance in such a manner that a value obtained by calculating $2 \times \theta$mr $+ 2 \times \theta$ml is a value between a stored maximum set value and a stored minimum set value.

[7] The image display device according to [6], in which

when an angle formed by the image light projected on the right eye of the user and the image light projected on the left eye of the user is $\theta$p,
the maximum set value is a value with which $\theta$p is maximized, and
the minimum set value is a value with which $\theta$p is minimized.

[8] The image display device according to any one of [1] to [7], in which
the image light is coherent light.
[9] The image display device according to any one of [1] to [8], in which
the image light is laser light.
[10] An image display system, including:

a plurality of mirrors that reflects image light emitted from at least one light source and projects the image light on an eye of a user and/or an optical element;
a mirror angle adjustment unit that adjusts an angle of each of the plurality of mirrors on the basis of a position of the eye or the optical element; and
an intermirror distance adjustment unit that adjusts a distance between the plurality of mirrors on the basis of the angle.

[11] An image display method, including:

by a plurality of mirrors, reflecting image light emitted from at least one light source and projecting the image light on an eye of a user and/or an optical element;
adjusting an angle of each of the plurality of mirrors on the basis of a position of the eye or the optical element; and
adjusting a distance between the plurality of mirrors on the basis of the angle.

REFERENCE SIGNS LIST

| | |
|---|---|
| 10 | Image display device |
| 1 | Image projection unit |
| 11 | Light source |
| 12 | Mirror |
| 13 | Position information acquisition unit |
| 131 | Half mirror |
| 132 | Position sensor |
| 14 | Control unit |
| 15 | Mirror angle adjustment unit |
| 151 | Mirror angle drive unit |
| 152 | Mirror angle sensor |
| 16 | Intermirror distance adjustment unit |
| 2 | Eyepiece optical unit |
| 21 | Optical element |
| 3 | User |
| 31 | Eye |
| 4 | Image light |
| 5 | Virtual image |
| 1000 | Image display system |
| 20 | Information communication network |
| $\theta mr$ | Angle of right mirror |
| $\theta ml$ | Angle of left mirror |
| $\theta pmax$ | Maximum set value |
| $\theta pmin$ | Minimum set value |
| dm | Mirror rotation center distance |
| S1 | Projecting image light on eye of user and/or optical element. |
| S2 | Adjusting angle of each of a plurality of mirrors |
| S3 | Adjusting distance between a plurality of mirrors |

**Claims**

1. An image display device, comprising:

   a plurality of mirrors that reflects image light emitted from at least one light source and projects the image light on an eye of a user and/or an optical element;
   a mirror angle adjustment unit that adjusts an angle of each of the plurality of mirrors on a basis of a position of the eye or the optical element; and
   an intermirror distance adjustment unit that adjusts a distance between the plurality of mirrors on a basis of the angle.

2. The image display device according to claim 1, wherein
   the optical element concentrates and projects the image light on the pupil of the user.

3. The image display device according to claim 1, further comprising
a position information acquisition unit that acquires information regarding a position of the eye or the optical element.

4. The image display device according to claim 3, wherein
the position information acquisition unit acquires the information regarding the position on a basis of a captured image including the eye or the optical element.

5. The image display device according to claim 1, wherein
the mirror angle adjustment unit adjusts the angle in a direction in which a difference between a position of the eye or the optical element before a movement and a position after the movement is reduced.

6. The image display device according to claim 1, wherein

the plurality of mirrors includes a right mirror corresponding to a right eye of a user and a left mirror corresponding to a left eye of the user, and
when the angle of the right mirror is $\theta mr$ and the angle of the left mirror is $\theta ml$, the intermirror distance adjustment unit adjusts the distance in such a manner that a value obtained by calculating $2 \times \theta mr + 2 \times \theta ml$ is a value between a stored maximum set value and a stored minimum set value.

7. The image display device according to claim 6, wherein

when an angle formed by the image light projected on the right eye of the user and the image light projected on the left eye of the user is $\theta p$,
the maximum set value is a value with which $\theta p$ is maximized, and
the minimum set value is a value with which $\theta p$ is minimized.

8. The image display device according to claim 1, wherein
the image light is coherent light.

9. The image display device according to claim 1, wherein
the image light is laser light.

10. An image display system, comprising:

a plurality of mirrors that reflects image light emitted from at least one light source and projects the image light on an eye of a user and/or an optical element;
a mirror angle adjustment unit that adjusts an angle of each of the plurality of mirrors on a basis of a position of the eye or the optical element; and
an intermirror distance adjustment unit that adjusts a distance between the plurality of mirrors on a basis of the angle.

11. An image display method, comprising:

by a plurality of mirrors, reflecting image light emitted from at least one light source and projecting the image light on an eye of a user and/or an optical element;
adjusting an angle of each of the plurality of mirrors on a basis of a position of the eye or the optical element; and
adjusting a distance between the plurality of mirrors on a basis of the angle.

# FIG. 1

# FIG. 2

# FIG. 3

START

SET ANGLE OF MIRROR TO INITIAL POSITION ⟿ S11

READ POSITION INFORMATION OF
EYES AND/OR OPTICAL ELEMENT ⟿ S12

READ ANGLE OF MIRROR ⟿ S13

CALCULATE DIFFERENCE ⟿ S14

ADJUST ANGLE OF MIRROR ⟿ S15

No ◇ END FOLLOWING? ⟿ S16

Yes

END

# FIG. 4

```
                    ┌─────────────┐
                    │    START    │
                    └──────┬──────┘
                           │
          ┌────────────────▼─────────────────────┐  ~ S21
          │   CALCULATE 2 × θmr + 2 × θml         │
          └────────────────┬─────────────────────┘
                           │
  No         ◄─────────────◆─────────────────►       ~ S22
          │       2 × θmr + 2 × θml > θpmax?     │
                           │ Yes
          ┌────────────────▼─────────────────────┐  ~ S23
          │ MOVE MIRROR IN DIRECTION IN WHICH dm │
          │              INCREASES                │
          └────────────────┬─────────────────────┘
                           │
  No         ◄─────────────◆─────────────────►       ~ S24
          │       2 × θmr + 2 × θml < θpmin?     │
                           │ Yes
          ┌────────────────▼─────────────────────┐  ~ S25
          │ MOVE MIRROR IN DIRECTION IN WHICH dm │
          │              DECREASES                │
          └────────────────┬─────────────────────┘
                           │
  No         ◄─────────────◆─────────────────►       ~ S26
          │           END FOLLOWING?             │
                           │ Yes
                    ┌──────▼──────┐
                    │     END     │
                    └─────────────┘
```

# FIG. 5

# FIG. 6

# FIG. 7

# FIG. 8

## INTERNATIONAL SEARCH REPORT

| | |
|---|---|
| International application No. | |
| | **PCT/JP2021/038374** |

**A.    CLASSIFICATION OF SUBJECT MATTER**

*G02B 27/02*(2006.01)i; *H04N 5/64*(2006.01)i
FI:    G02B27/02 Z; H04N5/64 511A

According to International Patent Classification (IPC) or to both national classification and IPC

**B.    FIELDS SEARCHED**

Minimum documentation searched (classification system followed by classification symbols)

G02B27/01; G02B27/02; H04N5/64

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)


**C.    DOCUMENTS CONSIDERED TO BE RELEVANT**

| Category* | Citation of document, with indication, where appropriate, of the relevant passages | Relevant to claim No. |
|---|---|---|
| X | JP 2004-523786 A (STEREONICS LTD) 05 August 2004 (2004-08-05)<br>    paragraphs [0031]-[0049], fig. 1-4 | 1, 10-11 |
| Y |     paragraphs [0031]-[0049], fig. 1-4 | 1-4, 8-11 |
| A |     paragraphs [0031]-[0049], fig. 1-4 | 5-7 |
| Y | JP 2019-109275 A (SONY CORP) 04 July 2019 (2019-07-04)<br>    paragraphs [0011]-[0030], fig. 1-2 | 1-4, 8-11 |
| Y | JP 2009-192561 A (BROTHER IND LTD) 27 August 2009 (2009-08-27)<br>    paragraphs [0021]-[0106], fig. 1, 7-8, 10, 14 | 1-4, 8-11 |
| A | JP 2003-279882 A (VICTOR CO OF JAPAN LTD) 02 October 2003 (2003-10-02)<br>    entire text, all drawings | 1-11 |
| A | US 2019/0235260 A1 (DOLBY LABORATORIES LICENSING CORPORATION) 01<br>August 2019 (2019-08-01)<br>    entire text, all drawings | 1-11 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 December 2021** | **21 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/038374**

| Patent document cited in search report | | | Publication date (day/month/year) | Patent family member(s) | | | Publication date (day/month/year) |
|---|---|---|---|---|---|---|---|
| JP | 2004-523786 | A | 05 August 2004 | US paragraphs [0036]-[0054], fig. 1-4 | 2004/0070825 | A1 | |
| | | | | WO | 2002/059681 | A1 | |
| | | | | EP | 1356338 | A1 | |
| JP | 2019-109275 | A | 04 July 2019 | US paragraphs [0036]-[0055], fig. 1-2 | 2020/0386996 | A1 | |
| | | | | WO | 2019/117014 | A1 | |
| | | | | CN | 111433659 | A | |
| JP | 2009-192561 | A | 27 August 2009 | WO | 2009/101960 | A1 | |
| JP | 2003-279882 | A | 02 October 2003 | (Family: none) | | | |
| US | 2019/0235260 | A1 | 01 August 2019 | WO entire text, all drawings | 2018/064146 | A1 | |
| | | | | EP | 3519869 | A1 | |
| | | | | CN | 109923444 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019113794 A